# FASCICULE DE BREVET EUROPEEN

(11) **EP 4 063 703 B1**
(45) Date de publication et mention de la délivrance du brevet: **15.02.2023**
(21) Numéro de dépôt: 22164196.2
(22) Date de dépôt: 24.03.2022
(51) Int. Cl.: F16L 9/21, B60H 1/00, F16L 55/033, F24F 13/24, F24F 13/02

(54) **CONDUIT DE CIRCULATION D'UN FLUIDE GAZEUX COMPRENANT UN REVÊTEMENT ABSORBANT ACOUSTIQUE**
STRÖMUNGSLEITUNG FÜR EIN GASFÖRMIGES FLUID MIT EINER SCHALLABSORBIERENDEN VERKLEIDUNG
CONDUIT FOR CIRCULATION OF A GASEOUS FLUID INCLUDING AN ACOUSTICALLY ABSORBENT COATING

(30) Priorité: 25.03.2021 FR 2102996
(43) Date de publication de la demande: 28.09.2022
(73) Titulaire: Plastiques du Val de Loire, 37130 Langeais (FR)
(72) Inventeur: TONEGUZZO, Philippe, 37500 Ballan Miré (FR); FLOTTE, Christophe, 72000 Le Mans (FR); DELORME, Samuel, 72600 Saint Saturnin (FR)
(74) Mandataire: Ipside

(56) Documents cités:
- EP-A1- 0 338 908
- EP-A1- 2 803 515
- WO-A1-97/28397
- FR-A1- 2 712 851
- FR-A1- 2 920 346
- US-A- 4 615 411
- Maagtechnic SA: "ISOLATION ACOUSTIQUE", , 30 juin 2016 (2016-06-30), pages 1-20, XP055862521, Extrait de l'Internet: URL:https://maagtechnic.ch/content/dam/ch/ pdf/elastomertechnik/Schallschutz_f.pdf [extrait le 2021-11-17]

## Description

### DOMAINE TECHNIQUE DE L'INVENTION

Le domaine de l'invention est celui de l'atténuation acoustique ou phonique.

Plus précisément, l'invention concerne un conduit de circulation d'un fluide gazeux, tel qu'un conduit d'aération, de ventilation, de climatisation, etc.

L'invention trouve notamment des applications dans le domaine des véhicules, en particulier dans le domaine automobile. Dans ce domaine particulier, l'invention concerne l'amélioration de l'acoustique dans les conduits d'air du système de chauffage, ventilation et climatisation du véhicule, communément désigné par l'acronyme HVAC pour « *heating, ventilation and air-conditioning* » en langue anglaise.

L'invention trouve plus particulièrement une application pour les véhicules électriques où l'acoustique est travaillée plus profondément pour atténuer certains bruits, tels que les bruits de ventilation, qui étaient auparavant couverts par le bruit d'un moteur thermique.

### ÉTAT DE LA TECHNIQUE

Il est connu de l'art antérieur des techniques d'atténuation acoustique dans des conduits (le document EP0338908A1 dévoile un tel conduit), comme par exemple des techniques d'application de matériaux absorbants à l'extérieur d'un conduit dont la paroi est perforée.

De telles techniques ont pour inconvénient d'occuper un volume important à l'extérieur du conduit, ce qui peut s'avérer très désavantageux notamment lorsque le dispositif d'atténuation doit être installé à proximité d'une sortie de conduit, telle qu'une bouche d'aération dans un véhicule, où l'espace disponible est restreint. Afin de parer à cet inconvénient, les solutions précitées font généralement utilisation d'un revêtement absorbant d'une épaisseur la plus faible possible, au détriment de l'atténuation acoustique cependant.

De plus, bien que les perforations dans la paroi aient pour effet avantageux d'améliorer l'atténuation acoustique, elles ont également l'effet désavantageux d'induire des pertes de charge dans le conduit, de par l'aspérité ainsi créée, qui est génératrice de turbulences.

Il existe également des techniques de perfectionnement de tels dispositifs, dans lesquels la paroi du conduit est conçue en creux, de manière à disposer le revêtement absorbant à l'intérieur de la paroi, et de réduire l'encombrement du dispositif à l'extérieur du conduit.

Cependant, une telle technique présente le désavantage d'être complexe à mettre en oeuvre, et se trouve par conséquent être également très coûteuse, ce qui est un facteur particulièrement défavorable en particulier dans le secteur automobile.

Ainsi, aucun des systèmes actuels ne permet de répondre simultanément à tous les besoins requis, à savoir de proposer une technique performante d'atténuation acoustique d'un conduit qui soit également peu coûteuse, peu encombrante, et simple à mettre en oeuvre.

### EXPOSÉ DE L'INVENTION

La présente invention vise à remédier à tout ou partie des inconvénients de l'état de la technique cités ci-dessus.

À cet effet, l'invention vise un conduit de circulation d'un fluide gazeux, en particulier d'air, comportant, uniquement sur une portion du conduit à proximité d'une ouverture du conduit, une paroi interne en matériau plein dépourvue de toute ouverture latérale, et couverte en tout ou partie par un revêtement absorbant acoustique, dans lequel ledit revêtement possède une épaisseur comprise entre 1 et 3 millimètres, et dans lequel le conduit est en polyéthylène basse densité moussé, d'une porosité comprise entre 0 et 30%.

En d'autres termes, le fait que le conduit soit couvert d'absorbant acoustique uniquement sur une portion de conduit à proximité d'une ouverture signifie que ledit revêtement absorbant acoustique ne couvre pas l'intégralité de la surface interne du conduit.

On définit par « à proximité » d'une ouverture du conduit, une zone s'étendant sur une profondeur de 0.5 à 2 fois le diamètre hydraulique de la section, lorsque celle-ci est globalement constante, ou sur une trentaine, préférentiellement une vingtaine de centimètres, encore plus préférentiellement sur une profondeur comprise entre trois et dix centimètres, vers l'intérieur du conduit, ou encore une zone s'étendant sur une profondeur correspondant au maximum à 5 à 15%, préférentiellement 10% de la longueur totale du conduit.

Contrairement aux solutions de l'art antérieur, la majeure partie des parois internes du conduit n'a pas besoin d'être couverte de revêtement absorbant.

Grâce à ces dispositions, une atténuation acoustique performante est obtenue, tout en mettant en oeuvre une technique particulièrement simple, économique, et rapide à mettre en place. En effet, le conduit étant dépourvu de toute ouverture ou lumière latérale sur l'intégralité de sa longueur, aucune étape d'usinage particulière du conduit n'est nécessaire. De plus, aucune perte aéraulique n'est introduite par cette technique, permettant à la fois d'éviter toute nuisance sonore, et toute déperdition énergétique (thermique ou aéraulique). Enfin, la mise en oeuvre de l'invention est particulièrement simple, le revêtement absorbant n'ayant qu'à être disposé sur la paroi interne à l'endroit désiré, sans nécessiter d'usinage ou d'adaptation particulière du conduit. Ainsi, l'invention peut également être mise en oeuvre sur des conduits n'ayant à l'origine pas été conçus pour recevoir un revêtement absorbant acoustique. L'ensemble de ces éléments ne représente également qu'un coût économique limité, de par le peu d'étapes de fabrication et de préparation, le coût raisonnable des matières utilisées, et la simplicité et rapidité de mise en oeuvre.

Le choix d'une épaisseur du revêtement comprise entre 1 et 3 millimètres représente un compromis entre une atténuation acoustique performante, et un encombrement maitrisé. En effet, une épaisseur plus importante possède l'avantage d'une atténuation acoustique plus importante, cependant elle augmente l'encombrement à l'intérieur du conduit, et elle est limitée par les dimensions internes du conduit. La mise en oeuvre de l'invention a démontré qu'une épaisseur minimale de 1 mm était nécessaire pour un effet d'atténuation satisfaisant, et qu'une épaisseur de 3 mm représentait un compromis idéal entre atténuation et encombrement. Ces valeurs font en particulier référence à une mise en oeuvre dans un conduit de type conduit HVAC d'un véhicule. Dans le cas d'un conduit de dimensions plus importantes, la surface couverte de revêtement absorbant sera augmentée, mais l'épaisseur reste préférentiellement comprise dans la plage de 1 à 3 mm.

Selon une variante, l'épaisseur du conduit est comprise entre 1 et 4 millimètres, et préférentiellement dans l'une des plages 1 à 3, 2 à 4, 2 à 3, ou 3 à 4 millimètres. Ces plages de valeurs sont sensiblement centrées autour, ou limitrophes, de la valeur optimale de 3 millimètres exposée ci-dessus, et présentent des performances satisfaisantes tout en maintenant un encombrement réduit.

En particulier, le conduit est en polyéthylène basse densité, qui est un matériau plastique apte à être moulé par extrusion et soufflage, ou par injection.

Grâce à ces dispositions, il est possible d'augmenter l'atténuation acoustique par rapport à un matériau plastique différent du polyéthylène. En particulier, l'utilisation du polyéthylène basse densité permet d'obtenir un gain acoustique par rapport au polyéthylène haute densité de l'ordre de 0,5 dB.

De manière avantageuse, le polyéthylène basse densité est moussé, de préférence par incorporation d'un agent gonflant.

En particulier, la porosité polymère moussé d'une porosité comprise entre 0 et 30%. Préférentiellement, la porosité est comprise entre 5 et 25%, encore plus préférentiellement entre 10 et 20%, notamment de 15%.

La porosité d'un tel matériau moussé peut être mesuré à l'aide de techniques connues.

Grâce à ces dispositions, il est possible d'obtenir un gain acoustique de l'ordre de 0,5 dB par rapport à un matériau plastique identique non moussé. Le moussage peut avantageusement être réalisé par voie chimique, c'est-à-dire par incorporation d'un agent gonflant lors de la préparation du matériau. Un moussage par un procédé physique est toutefois également possible. La porosité ainsi obtenue constitue une isolation phonique particulièrement performante. Le moussage de façon à obtenir une porosité comprise entre 0 et 30% permet d'obtenir les effets avantageux précités, tout en obtenant un conduit qui reste suffisamment rigide pour se maintenir sous son propre poids et sous les sollicitations externes. Le conduit obtenu n'est pas aisément déformable, notamment pas de manière manuelle.

Il est fait remarquer qu'une épaisseur de revêtement de 1 à 3 millimètres est faible en comparaison avec les solutions de l'art antérieur. Il a été constaté avec surprise qu'une telle épaisseur réduite, disposée uniquement sur une portion à proximité d'une sortie, présentait toutefois des performances d'atténuation très satisfaisantes. En effet, la combinaison avec le choix particulier de matériau du conduit permet de pallier une baisse de performance d'atténuation acoustique induite par une épaisseur réduite de revêtement absorbant. Le résultat est un conduit présentant de très bonnes performances d'atténuation, la solution étant simple à mettre en oeuvre sans modification du conduit, notamment car la faible épaisseur de revêtement ne réduit pas significativement la section du conduit. La disposition du revêtement uniquement à proximité de l'ouverture du conduit permet une mise en oeuvre très simple, une fois le conduit fabriqué ou assemblé, et ne nécessite que très peu de matériau absorbant.

Dans des modes de réalisation particuliers de l'invention, la paroi interne comporte un décaissement au niveau de la portion du conduit couverte par le revêtement absorbant acoustique, la profondeur du décaissement dans le sens de l'épaisseur de la paroi étant globalement égal à l'épaisseur du revêtement absorbant acoustique, de manière à ce que le conduit conserve une section globalement constante à proximité de ladite ouverture du conduit.

Grâce à ces dispositions, le revêtement absorbant et la paroi du conduit sont affleurant, la profondeur du décaissement étant sensiblement égal à l'épaisseur du revêtement. Avantageusement, le décaissement possède une forme correspondant à celle du revêtement absorbant, si bien qu'une fois le revêtement placé contre la paroi du conduit, dans le fond du décaissement, la section interne du conduit demeure inchangée au niveau de la portion de conduit couverte de revêtement absorbant. En d'autres termes, les dimensions internes du conduit, une fois le revêtement placé dans le décaissement, ne diffèrent pas de celle d'un conduit analogue qui ne serait pas muni de l'invention. Le décaissement, réalisé de manière à réaliser une continuité de la paroi au niveau du revêtement absorbant, permet d'éviter toute génération de turbulences dans le conduit, et permet ainsi de limiter toute déperdition d'énergie et toute nuisance acoustique. On précise qu'une légère modification de la conception du conduit est ainsi nécessaire (en comparaison avec la mise en oeuvre de l'invention dans un conduit habituel, non modifié). Cependant, une telle modification est très simple à mettre en oeuvre (par exemple par une légère modification du moule à partir duquel est fabriqué le conduit).

Dans des modes de réalisation particuliers de l'invention, le revêtement absorbant acoustique est une mousse absorbante thermoformable.

Dans des modes de réalisation particuliers de l'invention, le revêtement absorbant acoustique possède une masse surfacique comprise entre 500 et 2000 g/m2, et préférentiellement de 1350 g/m2.

Grâce à ces dispositions, la mousse peut être mise à l'épaisseur et à la forme du conduit de manière particulièrement simple. En effet, une mousse disponible sous forme de plaque ou rouleau peut être aisément découpée, puis thermoformée jusqu'à atteindre l'épaisseur voulue, ou inversement. Le moule de thermoformage peut également comprendre un relief particulier, correspondant à l'emplacement du revêtement à l'intérieur du conduit, permettant d'obtenir une forme de mousse s'agençant parfaitement à l'emplacement désigné dans le conduit. Les mousses présentant des valeurs de masse surfacique indiquées plus en amont sont particulièrement avantageuses en termes de performance, présentent un coût économique faible et sont facilement trouvables dans le commerce

Dans des modes de réalisation particuliers de l'invention, le revêtement absorbant acoustique est fixé à la surface interne de la paroi par agrafage.

Grâce à ces dispositions, la fixation du revêtement absorbant dans le conduit est particulièrement simple, rapide et économique. De plus, l'agrafage présente l'avantage d'une fixation fiable, qui n'est pas susceptible d'être altérée par le temps.

Dans des modes de réalisation particuliers de l'invention le revêtement absorbant acoustique est fixé à la surface interne de la paroi par collage, ladite surface interne étant traitée par une technique d'augmentation d'énergie de surface sur la zone de fixation de l'absorbant.

Dans des modes de réalisation particuliers de l'invention la technique d'augmentation d'énergie de surface est un flammage sur la zone de fixation de l'absorbant.

Grâce à ces dispositions, la fixation du revêtement absorbant est réalisée de manière particulièrement performante, la liaison entre le revêtement et la paroi pouvant être réalisée sur de larges surfaces, assurant un maintien du revêtement au plus près de la paroi. De plus, la préparation de la paroi interne permet d'éviter les inconvénients liés à la fiabilité du collage, en particulier sur du polyéthylène, de par sa faible énergie de surface. La préparation par flammage présente l'avantage de pouvoir être réalisée de manière particulièrement simple et rapide, bien qu'une préparation mécanique visant à augmenter l'énergie de surface puisse être envisagée également.

Dans des modes de réalisation particuliers de l'invention, le revêtement absorbant acoustique est disposé à proximité d'une sortie du conduit, située à l'opposé d'une source d'émission acoustique.

Grâce à ces dispositions, les nuisances sonores sont atténuées au plus proche de l'emplacement auquel se trouve un individu, c'est-à-dire généralement près d'une bouche d'aération, une sortie de ventilation, etc. De plus, le positionnement à proximité d'une sortie du conduit se traduit en une performance accrue en termes d'atténuation acoustique. En effet, une telle disposition permet de réduire la pression acoustique d'environ 0,2 dB par rapport à une disposition plus au niveau d'une ouverture d'entrée du conduit, c'est-à-dire par exemple côté « HVAC ».

L'invention a également pour objet un véhicule automobile comprenant un conduit selon l'invention.

Enfin, l'invention a également pour objet un procédé de préparation et d'installation d'un revêtement absorbant dans un conduit selon l'invention, comprenant les étapes décrites ci-dessous.

Une étape de mise en forme du revêtement absorbant, de préférence par thermocompression.

Une étape de découpe du revêtement absorbant à une dimension interne du conduit, de manière à obtenir une ou plusieurs portions de revêtement.

Une étape de positionnement et fixation de la ou des portions de revêtement sur la portion de la paroi interne destinée à être couverte par le revêtement absorbant.

Les avantages de ce procédé sont identiques à ceux associés aux caractéristiques structurelles décrites ci-dessus, et ne sont pas rappelés ici.

Dans des modes de réalisation particuliers de l'invention, l'étape de positionnement et de fixation comprend une sous-étape de positionnement de la portion de revêtement contre la paroi interne, suivie d'une sous-étape d'agrafage de la portion de revêtement pendant que cette dernière est maintenue contre la paroi interne.

Dans des modes de réalisation particuliers de l'invention, l'étape de positionnement et de fixation est précédée d'une étape de de préparation d'une zone de collage du revêtement sur la paroi interne, préférentiellement réalisée par flammage, et dans laquelle l'étape de positionnement et de fixation comprend une sous-étape d'application d'une colle sur une première face dite de collage de la portion de revêtement, et/ou sur la zone de collage, et une sous-étape de positionnement de ladite face de collage sur la paroi interne.

Dans des modes de réalisation particuliers de l'invention, le procédé comprend une étape initiale de fabrication d'un conduit par moulage par extrusion et soufflage, ou par moulage par injection, ou par moulage par injection et soufflage.

Une telle étape permet une fabrication du conduit de manière à obtenir un conduit dans les matières décrites plus en amont, avec ou sans soufflage, ainsi que selon la géométrie légèrement modifiée, comprenant le décaissement pour le revêtement absorbant, le cas échéant.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
La figure 1 est une vue schématique en perspective d'un conduit selon l'invention, la paroi étant représentée en transparence.
La figure 2 est une vue schématique en perspective d'un conduit selon l'invention dans une configuration différente, la paroi étant représentée en transparence.
La figure 3 est une vue schématique en perspective en coupe d'un conduit selon l'invention, laissant apparaître un décaissement du conduit.
La figure 4 est un schéma synoptique du procédé de préparation et d'installation d'un revêtement absorbant dans le conduit.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

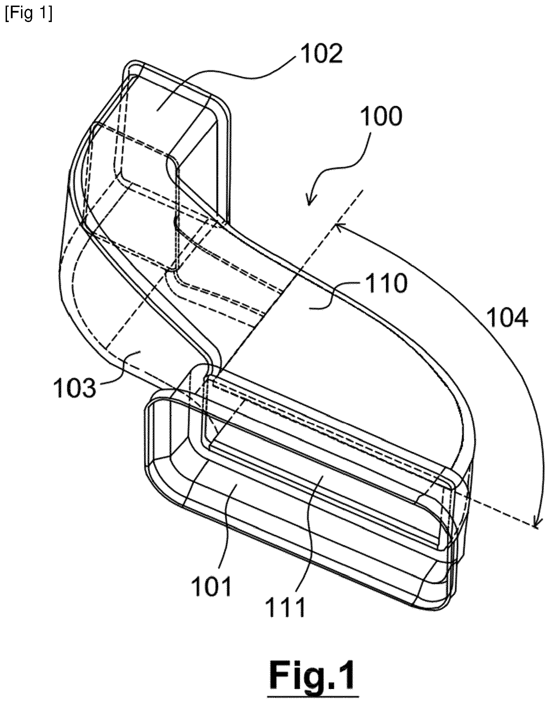

La figure 1 représente un conduit 100 tel que par exemple utilisé entre un système HVAC et un aérateur d'un véhicule automobile. Le conduit 100 peut plus largement être un conduit de circulation d'un fluide gazeux quel qu'il soit.

Le conduit 100 comprend une ouverture d'entrée 101 et une ouverture de sortie 102 de fluide. L'ouverture de sortie 102 est ici située à l'opposé de l'ouverture d'entrée 101 qui est proche d'une source d'émission acoustique.

Le conduit 100 comporte, sur au moins une portion de conduit 104, en particulier à proximité de l'ouverture de sortie 102, une paroi 103 interne en matériau plastique plein dépourvue de toute ouverture latérale, c'est-à-dire que la paroi 103 interne ne comporte aucune perforation, trou, lumière ou perçage. La paroi 103 interne est ainsi globalement imperméable au fluide circulant dans le conduit 100, ce fluide étant principalement de l'air dans le présent exemple de réalisation.

Un tel conduit est préférentiellement en matériau plastique. Il est avantageusement produit par moulage par extrusion soufflage d'un polymère tel du polyéthylène basse ou haute densité (PEBD ou PEHD, connus également sous leurs acronymes en langue anglaise *LDPE* et *HDPE*), le conduit étant alors formé en une seule partie.

Cependant, le conduit 100 peut également être produit, notamment en PEBD ou PEHD, par moulage par injection, ou moulage par extrusion avec soufflage. Le conduit 100 peut être avantageusement constitué de deux demi-conduits, reliés par exemple par une charnière et solidarisés par clipsage.

On note également que le conduit 100 est généralement de section globalement rectangulaire ou cylindrique, bien qu'il puisse prendre toute autre forme. On gardera à l'esprit qu'une section rectangulaire ou cylindrique s'avère avantageuse pour la mise en oeuvre du procédé de préparation et d'installation du dispositif d'atténuation décrit ci-après.

On note de plus que le conduit 100 peut comporter plus d'une ouverture d'entrée et de sortie, ainsi que des ramifications par exemple.

Comme cela est visible sur la figure 1, le conduit 100 est équipé d'un dispositif d'atténuation acoustique 110 sur la portion du conduit 104.

Le dispositif d'atténuation acoustique 110 est composé d'un revêtement absorbant acoustique 111, qui est appliqué contre la paroi 103 interne, préférentiellement à proximité de l'ouverture de sortie 102, c'est-à-dire par exemple du côté aérateur dans un véhicule. En d'autres termes, la paroi 103 interne est couverte par le revêtement absorbant acoustique 111, qui est ainsi disposé à l'intérieur du conduit 100. De manière alternative, le revêtement absorbant acoustique 111 peut également être appliqué contre la paroi 103 interne, à proximité d'une ouverture d'entrée du conduit, c'est-à-dire par exemple du côté « HVAC » dans un véhicule.

Dans l'exemple représenté à la figure 1, la paroi 103 interne n'est munie du revêtement absorbant 111 que sur une partie de la section de la portion de conduit 104, dû à la géométrie du conduit 100.

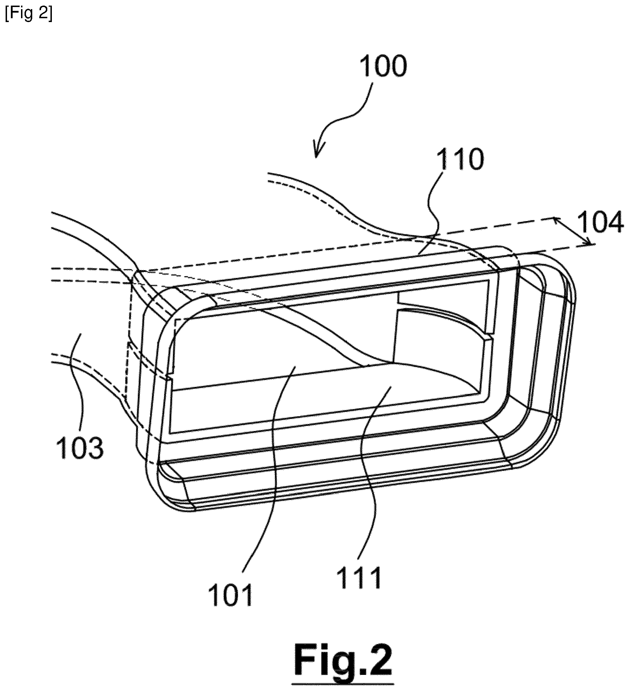

Dans un autre exemple de mise en oeuvre du dispositif d'atténuation acoustique 110, représenté à la figure 2, la paroi 103 interne est couverte par le revêtement absorbant 111 sur toute la section de la portion de conduit 104, c'est-à-dire que le revêtement absorbant 111 est disposé de façon annulaire à l'intérieur du conduit 100, à proximité de l'ouverture de sortie 102.

Sur la figure 2, le revêtement absorbant 111 est réalisé en deux parties, pour des raison pratiques de fabrication. Les deux parties sont ici séparées par un interstice, qui correspond à quelques millimètres en pratique. Cet interstice est dû aux tolérances de fabrication des parties du revêtement absorbant 111, qui autorisent une fabrication peu coûteuse, en comparaison avec une fabrication aux tolérances plus resserrées ne laissant pas apparaître d'interstice. Cependant, une telle fabrication plus précise peut bien entendu être mise en oeuvre également si nécessaire. On précise enfin qu'un tel interstice n'a pas d'influence significative sur les performances du conduit.

Sur les exemples représentés aux figures 1 et 2, le revêtement absorbant 111 est appliqué uniquement sur une zone à proximité de l'ouverture de sortie 102. D'une part, c'est en particulier proche de la sortie du conduit 100 que l'on veut réduire les nuisances sonores, la sortie étant généralement proche d'un utilisateur. D'autre part, l'application du revêtement absorbant 111 dans une zone à proximité de l'ouverture, c'est-à-dire sur la portion de conduit 104, peut être réalisée simplement de manière manuelle. Ainsi, la zone à proximité de l'ouverture peut être définie comme la zone s'étendant au plus sur une vingtaine de centimètres à l'intérieur du conduit 100, à partir de l'ouverture de sortie 102. Cette zone peut également être définie par rapport à la géométrie de la section de cette portion de conduit. Plus précisément, la profondeur sur laquelle s'étend cette zone vers l'intérieur du conduit 100 peut être définie par un multiple du diamètre hydraulique de la section, lorsque celle-ci est globalement constante, qui peut être déterminé de façon connue. Un tel facteur multipliant est avantageusement situé entre 0.5 et 2.

De manière alternative, la zone peut également être définie par rapport à la géométrie globale du conduit 100 sur une portion proche de la sortie 102. Par exemple, si le conduit 100 est coudé immédiatement avant la sortie 102, comme représenté sur la figure 1, l'intérieur du conduit sera plus difficilement accessible à la main, et la zone à proximité de l'ouverture peut dans ce cas être définie empiriquement en fonction de la géométrie globale du conduit 100 sur une portion proche de la sortie 102.

Contrairement aux solutions de l'art antérieur, il est suffisant de placer le revêtement absorbant 111 seulement sur une portion à proximité d'une ouverture de sortie 102 du conduit, sans couvrir le reste du conduit 100 de revêtement absorbant.

Il n'est cependant pas exclu d'appliquer le revêtement absorbant 111 sur l'intégralité de la surface interne du conduit 100, ou sur plusieurs parties de la surface interne du conduit 100 (par exemple à une entrée et une sortie, un embranchement du conduit, etc.). Dans ce dernier cas, le conduit 100 comporte alors plusieurs portions de conduit munies de dispositif d'atténuation acoustique 110. II est toutefois préféré de n'appliquer le revêtement absorbant 111 que sur des portions à proximité d'une ouverture du conduit.

Le revêtement absorbant 111 est en général une mousse synthétique avec une structure alvéolaire ouverte, avec une taille de pores élevée, c'est-à-dire préférentiellement comprise entre 10 et 100 micromètres. Selon une variante, le revêtement absorbant 111 est un empilement de plusieurs couches de matières absorbantes.

De préférence, l'absorbant acoustique possède une masse surfacique comprise entre 500 et 2000 g/m2, et préférentiellement égale à 1350 g/m2. De préférence, la densité de l'absorbant acoustique est comprise entre 0,2 et 0,7 g/cm3, et plus particulièrement de 0,45 g/cm3.

Avantageusement, une telle mousse est thermoformable, de manière à pouvoir être formée aux dimensions de la zone du conduit 100 qui doit être couverte par le revêtement absorbant 111.

Plus précisément, la mousse est thermocomprimée, de manière à être réduite à une épaisseur de l'ordre de 1 à 10 millimètres, en particulier de l'ordre de 1 à 4 millimètres, et préférentiellement 1 à 3 millimètres.

Avantageusement, cette épaisseur est de l'ordre de 3 millimètres, ce qui représente un compromis entre une isolation phonique performante et un encombrement acceptable.

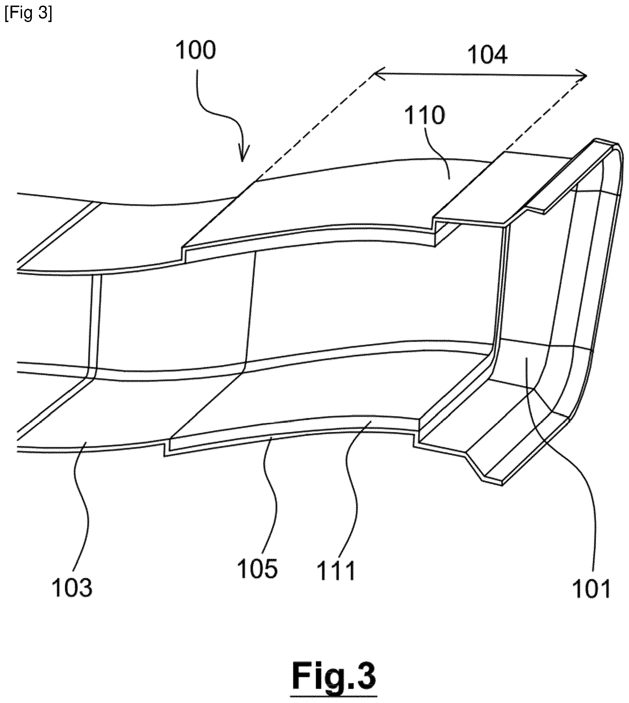

Afin que le revêtement absorbant 111 appliqué sur la paroi 103 interne ne fasse pas saillie à l'intérieur du conduit 100, ce dernier comporte un décaissement 105 au niveau de la portion du conduit 104 couverte par le revêtement absorbant 111, comme cela est illustré sur la figure 3.

La profondeur du décaissement 105 dans le sens de l'épaisseur du matériau constituant le conduit 100 est globalement égal à l'épaisseur du revêtement absorbant 111, de manière à ce que le conduit 100 conserve une section globalement constante sur la portion de conduit 104.

De cette manière, les pertes aérauliques sont limitées, la présence du revêtement absorbant 111 ne créant ainsi pas d'obstacle propre à générer des turbulences, qui engendreraient des pertes de charge.

De plus, le décaissement 105 forme également un guide pour le positionnement du revêtement absorbant 111 lors de l'installation du dispositif 110, le décaissement 105 étant aux dimensions du revêtement absorbant 111.

Le revêtement absorbant 111 est préférentiellement fixé sur la paroi 103 interne par agrafage, bien qu'il puisse également être collé. Dans ce dernier cas, et en particulier lorsque le matériau de la paroi 103 interne est du polyéthylène, il convient de sélectionner une colle permettant une adhérence satisfaisante et un collage suffisamment durable, étant donné la faible énergie de surface du polyéthylène, que ce dernier soit moussé ou pas, comme décrit ci-dessous.

Afin d'améliorer l'adhérence du revêtement absorbant 111, la paroi 103 interne est traitée par flammage sur les zones destinées à être munies du revêtement absorbant 111, afin d'augmenter l'énergie de la paroi 103 interne sur ces zones, et ainsi permettre un collage.

De manière avantageuse, le matériau du conduit 100 est un polymère moussé. Un tel matériau est par exemple obtenu par voie de moussage chimique, c'est-à-dire par incorporation d'un agent gonflant dans le polymère de base, libérant un gaz lors de de la fabrication du conduit 100. Ainsi, le matériau du conduit 100 possède une structure poreuse plus importante et devient plus souple, lui permettant d'augmenter son pouvoir d'absorption acoustique. La porosité ainsi créée est de type « fermée », c'est-à-dire que les pores ne communiquent pas entre eux. La structure de tels plastiques moussés est généralement de type sandwich avec deux peaux externes denses et une structure interne alvéolaire.

De manière alternative, le matériau du conduit 100 peut également être moussé par voie physique, c'est-à-dire par injection d'un gaz sous pression lors de la fabrication du matériau. Le moussage du conduit 100 est préférentiellement intégral.

Indépendamment de la voie de moussage, la porosité du matériau après moussage est avantageusement comprise entre 0% et 30%, en particulier lorsque le matériau est produit par extrusion soufflage. Préférentiellement, elle est alors comprise entre 10 et 20%, par exemple 15%. Lorsque le matériau est produit par moulage par injection, la porosité est préférentiellement comprise entre 5% et 15%, préférentiellement de 10%. Ces plages de valeurs permettent d'obtenir un compromis entre amélioration de l'atténuation acoustique et rigidité du conduit 100.

On précise également que l'assouplissement du conduit 100, c'est-à-dire l'abaissement de son module de traction, n'empêche aucunement l'opération d'assemblage sur le véhicule, et permet une fixation fiable du conduit 100 sur le système HVAC et les aérateurs, et, plus largement, permet au conduit 100 de maintenir sans difficulté sa forme sous l'effet de son poids, de vibration, de la chaleur, etc.

Bien que toute combinaison de polymère avec un agent gonflant soit envisageable pour réaliser le conduit 100, les combinaisons impliquant du polyéthylène basse densité (PEBD), et haute densité (PEHD), avec ou sans moussage, présentent des résultats très satisfaisants en termes d'atténuation acoustique.

Deux mousses acoustiques absorbantes disponibles dans le commerce ont été fait l'objet d'essais, présentant des résultats différents en termes de performances acoustiques. Plus précisément, les mousses DECI-TEX^{®} D-TN90, commercialisée par la société L&L Products^{®}, et 5015T, commercialisée par la société Nitto^{®}, ont été testées.

Des mesures ont été réalisées pour un conduit 100 tel qu'illustré à la figure 2, la portion de conduit 104 munie de revêtement absorbant 111 s'étendant entre 5 et 10 centimètres à partir de l'ouverture de sortie 102. On précise qu'un conduit moussé dans le tableau ci-dessous désigne un conduit 100 moussé dans son intégralité, avec une porosité moyenne d'environ 15%, et non seulement sur la portion de conduit 104.

Le revêtement utilisé dans ces essais possède une épaisseur de 3 millimètres. Il a été placé à proximité d'une sortie du conduit, sur une profondeur d'environ 20 centimètres vers l'intérieur du conduit.

Les mesures ont été réalisées en chambre semi anéchoïque, pour la gamme de fréquence 200 Hz à 5000 Hz.

Le tableau ci-dessous indique les gains acoustiques obtenus pour différentes combinaisons de polymère, moussage et mousse absorbante. Une valeur positive signifie une atténuation acoustique.

**[Table 1]**

| | Gain acoustique par rapport à un conduit en PEHD non moussé |
|---|---|
| Conduit en PEHD non moussé | - |
| Conduit en PEBD non moussé | 0.5 dB |
| Conduit en PEHD moussé | 0.5 dB |
| Conduit en PEBD moussé | 1 dB |
| Conduit en PEHD moussé, revêtement absorbant 5015T | 1.3 à 2.5 dB |
| Conduit en PEBD moussé, revêtement absorbant 5015T | 1.8 à 3 dB |
| Conduit en PEHD moussé, revêtement absorbant DECI-TEX^{®} D-TN90 | 2.5 à 3.5 dB |
| Conduit en PEBD moussé, revêtement absorbant DECI-TEX^{®} D-TN90 | 3 à 4 dB |

Ainsi, le moussage du matériau du conduit 100 permet un gain d'environ 0.5 dB pour un même matériau, le revêtement absorbant DECI-TEX^{®} D-TN90 permet un gain compris entre 2 et 3 dB tandis que le revêtement absorbant 5015T permet un gain compris entre 0.8 et 2 dB, et le remplacement du PEHD par du PEBD permet un gain d'environ 0.5 dB.

Le gain acoustique maximal obtenu grâce au dispositif d'atténuation 110 est donc d'environ 4 dB, par rapport à un conduit 100 en PEHD simple. Ce cas de figure est obtenu pour un conduit 100 en PEBD moussé muni d'un revêtement absorbant DECI-TEX^{®} D-TN90. Un gain acoustique de 4 dB signifie une pression acoustique divisée par 1.6, ce qui se traduit en un confort acoustique fortement amélioré pour un utilisateur d'un véhicule disposant de l'invention.

L'invention a également pour objet un procédé 200 de préparation et d'installation du revêtement absorbant acoustique 11 dans le conduit 100, comme l'a laissé entrevoir la description ci-dessus. Ainsi, les étapes du procédé 200 ne seront décrites que succinctement, de manière à clarifier la mise en oeuvre du conduit 100 selon l'invention.

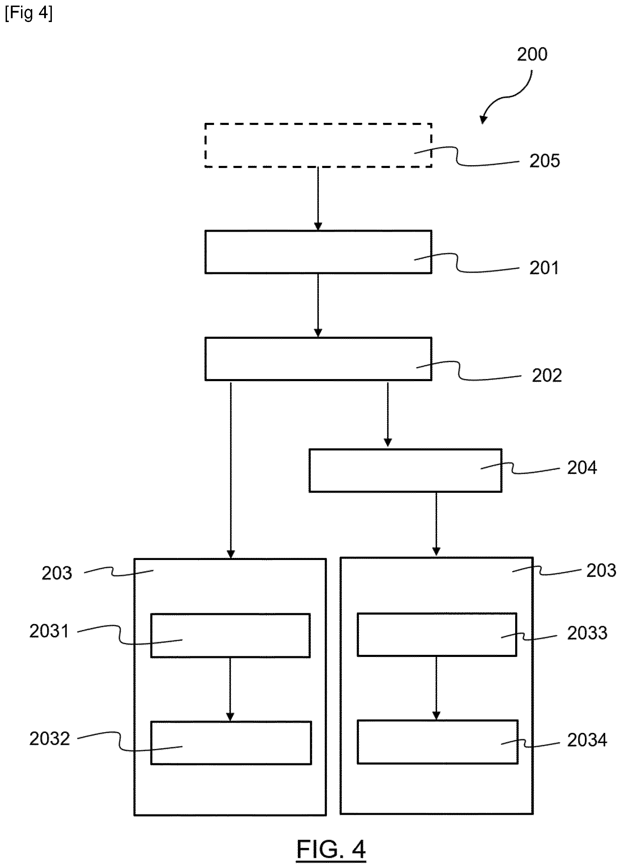

Le procédé 200 comprend selon une première variante les étapes 201 à 203 décrites ci-après, et selon une seconde variante les étapes 201 à 204 décrites ci-après, et optionnellement une étape initiale 205, comme illustré sur la figure 4.

Au cours d'une étape 201 de mise en forme du revêtement absorbant acoustique 111, on confère audit revêtement son épaisseur et son relief final, de manière à ce qu'il épouse de près la paroi 103 interne. Cette étape est de préférence une étape de thermocompression, lorsque le revêtement absorbant acoustique 111 est en mousse.

Au cours d'une étape 202 de découpe du revêtement absorbant à une dimension interne du conduit, ce dernier est mis à la dimension de la portion de conduit 104. Il est possible d'obtenir une seule portion de revêtement, ou bien plusieurs portions, qui seront disposées sur la paroi 103 interne de manière indépendante, de manière juxtaposée ou non.

On précise que les deux étapes ci-dessus peuvent être interverties, la mise en forme pouvant être effectué avant le découpage, ou inversement.

De manière alternative, il est également possible de réaliser les étapes de mise en forme 201 et de découpe 202 simultanément, l'outillage pour la mise en forme comprenant alors également des moyens de découpe.

Au cours d'une étape 203 de positionnement et de fixation, la ou les portions de revêtement obtenues précédemment sont disposées sur la paroi 103 interne de la portion de conduit 104 destinée à être couverte par le revêtement absorbant acoustique 111.

Selon une variante, l'étape 203 de positionnement et de fixation comprend une sous-étape 2031 de positionnement de la portion de revêtement contre la paroi 103 interne, suivie d'une sous-étape 2032 d'agrafage de la portion de revêtement pendant que cette dernière est maintenue contre la paroi 103 interne.

Selon une autre variante, l'étape 203 de positionnement et de fixation est précédée d'une étape de de préparation 204 d'une zone de collage du revêtement sur la paroi 103 interne, préférentiellement réalisée par flammage. L'étape de positionnement et de fixation comprend par ailleurs une sous-étape 2033 d'application d'une colle, ladite colle étant appliquée sur une première face dite de collage de la ou des portions de revêtement, et/ou sur la zone de collage de la paroi 103 interne, et une sous-étape 2034 de positionnement de ladite face de collage sur la paroi 103 interne.

On précise également que selon une variante, le conduit 100 peut être obtenu étape initiale 205 de fabrication d'un conduit 100 par moulage par extrusion et soufflage, ou par moulage par injection, ou par moulage par injection et soufflage. Cette étape est alors mise en oeuvre en amont des autres étapes du procédé 200.

A la lumière de ce qui précède, il est évident que le procédé 200 est particulièrement simple, rapide et peu coûteux à mettre en oeuvre.

## Revendications

1. Conduit (100) de circulation d'un fluide gazeux, en particulier d'air, comportant uniquement sur une portion (104) du conduit à proximité d'une ouverture (101) du conduit, une paroi interne (103) en matériau plein dépourvue de toute ouverture latérale, et couverte en tout ou partie par un revêtement (111) absorbant acoustique,
dans lequel ledit revêtement (111) possède une épaisseur comprise entre 1 et 3 millimètres,
et dans lequel le conduit (100) est en polyéthylène basse densité moussé, d'une porosité comprise entre 0 et 30%.

2. Conduit (100) selon la revendication 1, dans lequel la paroi interne (103) comporte un décaissement (105) au niveau de la portion (104) du conduit couverte par le revêtement (111) absorbant acoustique, la profondeur du décaissement dans le sens de l'épaisseur de la paroi étant globalement égal à l'épaisseur du revêtement absorbant acoustique, de manière à ce que le conduit conserve une section globalement constante à proximité de ladite ouverture (101) du conduit.

3. Conduit (100) selon l'une quelconque des revendications 1 à 2, dans lequel le revêtement (111) absorbant acoustique est une mousse absorbante thermoformable.

4. Conduit (100) selon l'une quelconque des revendications 1 à 3, dans lequel le revêtement (111) absorbant acoustique possède une masse surfacique comprise entre 500 et 2000 g/m2, et préférentiellement de 1350 g/m2.

5. Conduit (100) selon l'une quelconque des revendications 1 à 4, dans lequel le revêtement (111) absorbant acoustique est fixé à la surface interne (103) de la paroi par agrafage.

6. Conduit (100) selon l'une quelconque des revendications 1 à 4, dans lequel le revêtement (111) absorbant acoustique est fixé à la surface interne de la paroi (103) par collage, ladite surface interne étant traitée par une technique d'augmentation d'énergie de surface sur la zone de fixation de l'absorbant.

7. Conduit (100) selon la revendication 6, dans lequel la technique d'augmentation d'énergie de surface est un flammage sur la zone de fixation de l'absorbant.

8. Conduit (100) selon l'une quelconque des revendications 1 à 7, dans lequel le revêtement (111) absorbant acoustique est disposé à proximité d'une sortie (101) du conduit, située à l'opposé d'une source d'émission acoustique.

9. Véhicule automobile comprenant un conduit (100) selon l'une quelconque des revendications précédentes.

10. Procédé (200) de préparation et d'installation d'un revêtement absorbant dans un conduit (100) selon l'une quelconque des revendications 1 à 8, **caractérisé en ce qu'**il comprend les étapes de :
- mise en forme (201) du revêtement (111) absorbant, de préférence par thermocompression ;
- découpe (202) du revêtement absorbant à une dimension interne du conduit, de manière à obtenir une ou plusieurs portions de revêtement ;
- positionnement et fixation (203) de la ou des portions de revêtement sur la portion de la paroi interne (103) destinée à être couverte par le revêtement absorbant.

11. Procédé (200) selon la revendication 10, dans lequel l'étape de positionnement et de fixation (203) comprend une sous-étape de positionnement (2031) de la portion de revêtement contre la paroi interne, suivie d'une sous-étape d'agrafage (2032) de la portion de revêtement pendant que cette dernière est maintenue contre la paroi interne.

12. Procédé (200) selon la revendication 10, dans lequel l'étape de positionnement et de fixation (203) est précédée d'une étape de de préparation (204) d'une zone de collage du revêtement sur la paroi interne, préférentiellement réalisée par flammage, et dans laquelle l'étape de positionnement et de fixation comprend une sous-étape d'application d'une colle (2033) sur une première face dite de collage de la portion de revêtement, et/ou sur la zone de collage, et une sous-étape de positionnement (2034) de ladite face de collage sur la paroi interne.

13. Procédé (200) selon l'une quelconque des revendications 10 à 12, comprenant une étape initiale (205) de fabrication d'un conduit (100) par moulage par extrusion et soufflage, ou par moulage par injection, ou par moulage par injection et soufflage.

## Patentansprüche

1. Kanal (100) zur Zirkulation eines gasförmigen Fluids, insbesondere Luft, der auf nur einem Abschnitt (104) des Kanals, in der Nähe einer Öffnung (101) des Kanals, eine Innenwand (103) aus Vollmaterial ohne jegliche seitliche Öffnung aufweist, und ganz oder teilweise von einer schallabsorbierenden Verkleidung (111) bedeckt ist,
wobei die Verkleidung (111) eine Dicke von 1 bis 3 Millimeter hat,
und wobei der Kanal (100) aus geschäumtem Polyethylen niedriger Dichte mit einer Porosität zwischen 0 und 30% besteht.

2. Kanal (100) nach Anspruch 1, wobei die Innenwand (103) eine Vertiefung (105) im Bereich des Abschnitts (104) des Kanals aufweist, der von der schallabsorbierenden Verkleidung (111) bedeckt wird, wobei die Tiefe der Vertiefung in der Richtung der Dicke der Wand in ihrer Gesamtheit gleich der Dicke der schallabsorbierenden Verkleidung ist, so dass der Kanal einen in seiner Gesamtheit konstanten Querschnitt in der Nähe der Öffnung (101) des Kanals behält.

3. Kanal (100) nach einem der Ansprüche 1 bis 2, wobei die schallabsorbierende Verkleidung (111) ein thermoformbarer absorbierender Schaum ist.

4. Kanal (100) nach einem der Ansprüche 1 bis 3, wobei die schallabsorbierende Verkleidung (111) eine flächenbezogene Masse zwischen 500 und 2000 g/m2 hat, und vorzugsweise 1350 g/m2.

5. Kanal (100) nach einem der Ansprüche 1 bis 4, wobei die schallabsorbierende Verkleidung (111) durch Anheften an der Innenfläche (103) der Wand befestigt ist.

6. Kanal (100) nach einem der Ansprüche 1 bis 4, wobei die schallabsorbierende Verkleidung (111) durch Verkleben an der Innenfläche der Wand (103) befestigt ist, wobei die Innenfläche mit einer Technik zur Erhöhung der Oberflächenenergie in der Befestigungszone des Absorbers behandelt wird.

7. Kanal (100) nach Anspruch 6, wobei die Technik zur Erhöhung der Oberflächenenergie ein Beflammen in der Befestigungszone des Absorbers ist.

8. Kanal (100) nach einem der Ansprüche 1 bis 7, wobei die schallabsorbierende Verkleidung (111) in der Nähe eines Auslasses (101) des Kanals angeordnet ist, der gegenüber einer Schallemissionsquelle positioniert ist.

9. Kraftfahrzeug, einen Kanal (100) umfassend, nach einem der vorhergehenden Ansprüche.

10. Verfahren (200) zur Vorbereitung und Installierung einer absorbierenden Verkleidung in einem Kanal (100) nach einem der Ansprüche 1 bis 8, **dadurch gekennzeichnet, dass** es die Schritte umfasst:
- Formgebung (201) der absorbierenden Verkleidung (111), bevorzugterweise durch Thermokompression;
- Zuschneiden (202) der absorbierenden Verkleidung auf ein Innenmaß des Kanals, um einen oder mehrere Verkleidungsabschnitte zu erhalten;
- Positionierung und Befestigung (203) des oder der Verkleidungsabschnitte am Abschnitt der Innenwand (103), der von der absorbierenden Verkleidung bedeckt werden soll.

11. Verfahren (200) nach Anspruch 10, wobei der Schritt der Positionierung und Befestigung (203) einen Teilschritt der Positionierung (2031) des Verkleidungsabschnitts gegen die Innenwand umfasst, gefolgt von einem Teilschritt des Anheftens (2032) des Verkleidungsabschnitts, während dieser gegen die Innenwand gehalten wird.

12. Verfahren (200) nach Anspruch 10, wobei dem Schritt der Positionierung und Befestigung (203) ein Schritt der Vorbereitung (204) einer Klebezone der Verkleidung an der Innenwand vorangeht, vorzugsweise durch Beflammen realisiert, und wobei dem Schritt der Positionierung und Befestigung ein Teilschritt des Auftragens eines Klebstoffes (2033) auf eine erste Klebefläche des Verkleidungsabschnitts umfasst und/oder auf die Klebezone, und einen Teilschritt zur Positionierung (2034) der Klebefläche an der Innenwand.

13. Verfahren (200) nach einem der Ansprüche 10 bis 12, einen initialen Schritt (205) der Herstellung eines Kanals (100) durch Extrusionsblasformen oder Spritzgießen oder Spritzstreckblasen umfassend.

## Claims

1. A conduit (100) for circulation of a gaseous fluid, in particular air, including, only over one portion (104) of the conduit proximate to an opening (101) of the conduit, an inner wall (103) made of a solid material devoid of any lateral opening, and covered entirely or partially by an acoustically-absorbing covering (111),
wherein said covering (111) has a thickness comprised between 1 and 3 millimetres,
and wherein the conduit (100) is made of low-density polyethylene foam, with a porosity comprised between 0 and 30%.

2. The conduit (100) according to claim 1, wherein the inner wall (103) includes a depression (105) at the portion (104) of the conduit covered by the acoustically-absorbing covering (111), the depth of the depression in the direction of the thickness of the wall being generally equal to the thickness of the acoustically-absorbing covering, so that the conduit keeps a generally constant section proximate to said opening (101) of the conduit.

3. The conduit (100) according to any one of claims 1 to 2, wherein the acoustically-absorbing covering (111) is a thermoformable absorbent foam.

4. The conduit (100) according to any one of claims 1 to 3, wherein the acoustically-absorbing covering (111) has a basis weight comprised between 500 and 2,000 g/m², and preferably 1,350 g/m².

5. The conduit (100) according to any one of claims 1 to 4, wherein the acoustically-absorbing covering (111) is attached to the inner surface (103) of the wall by stapling.

6. The conduit (100) according to any one of claims 1 to 4, wherein the acoustically-absorbing covering (111) is attached to the inner surface of the wall (103) by gluing, said inner surface being treated by a surface energy enhancement technique on the attachment area of the absorber.

7. The conduit (100) according to claim 6, wherein the surface energy enhancement technique is a flame treatment over the attachment area of the absorber.

8. The conduit (100) according to any one of claims 1 to 7, wherein the acoustically-absorbing covering (111) is disposed proximate to an outlet (101) of the conduit, located opposite to an acoustic emission source.

9. A motor vehicle comprising a conduit (100) according to any one of the preceding claims.

10. A method (200) for preparing and installing an absorbing covering in a conduit (100) according to any one of claims 1 to 8, **characterised in that** it comprises the steps of:
- shaping (201) the absorbing covering (111), preferably by thermocompression;
- cutting (202) the absorbing covering to an inner dimension of the conduit, so as to obtain one or more covering portion(s);
- positioning and attaching (203) the covering portion(s) over the portion of the inner wall (103) intended to be covered by the absorbing covering.

11. The method (200) according to claim 10, wherein the positioning and attachment step (203) comprises a sub-step of positioning (2031) the covering portion against the inner wall, followed by a sub-step of stapling (2032) the covering portion while the latter is held against the inner wall.

12. The method (200) according to claim 10, wherein the positioning and attachment step (203) is preceded by a step of preparing (204) an area for gluing the covering on the inner wall, preferably carried out by flame treatment, and wherein the positioning and attachment step comprises a sub-step of applying a glue (2033) over a first so-called gluing face of the covering portion, and/or over the gluing area, and a sub-step of positioning (2034) said gluing face over the inner wall.

13. The method (200) according to any one of claims 10 to 12, comprising an initial step (205) of manufacturing a conduit (100) by extrusion and blow moulding, or by injection moulding, or by injection and blow moulding.
